Europäisches Patentamt

European Patent Office

Office européen des brevets

(11) Numéro de publication: **0 402 267**

**A1**

## (12) DEMANDE DE BREVET EUROPEEN

(21) Numéro de dépôt: 90401569.0

(22) Date de dépôt: 08.06.90

(51) Int. Cl.⁵: **H02P 7/628, H02P 7/62, D06F 37/30**

(30) Priorité: 09.06.89 FR 8907674
01.12.89 FR 8915883

(43) Date de publication de la demande:
**12.12.90 Bulletin 90/50**

(84) Etats contractants désignés:
**DE ES FR GB IT**

(71) Demandeur: **SOCIETE ELECTROMECANIQUE DU NIVERNAIS - SELNI**
**6, rue Louise-Michel**
**F-58000 Nevers(FR)**

(72) Inventeur: **Bergmann, Claude Jean**
**THOMSON-CSF SCPI Cédex 67**
**F-92045 Paris la Défense(FR)**

Inventeur: **Forest, François**
**THOMSON-CSF SCPI Cédex 67**
**F-92045 Paris la Défense(FR)**
Inventeur: **Guigui, Jacques**
**THOMSON-CSF SCPI Cédex 67**
**F-92045 Paris la Défense(FR)**
Inventeur: **Huron, Claude**
**THOMSON-CSF SCPI Cédex 67**
**F-92045 Paris la Défense(FR)**
Inventeur: **Templer, Dominique**
**THOMSON-CSF SCPI Cédex 67**
**F-92045 Paris la Défense(FR)**

(74) Mandataire: **Phan, Chi Quy et al**
**THOMSON-CSF SCPI**
**F-92045 PARIS LA DEFENSE CEDEX 67(FR)**

(54) **Système à moteur électrique d'entraînement en rotation à vitesse variable et appareil muni d'un tel système.**

(57) Système d'entraînement à moteur électrique asynchrone à stator à phases à structure bifilaire à point milieu et à vitesse rendue variable par variation de la fréquence statorique, caractérisé en ce qu'il comprend une alimentation électrique des phases (7, 8) du stator à structure bifilaire (5) du moteur asynchrone (2) effectuée par un onduleur (3,41) comportant des interrupteurs statiques (12, 13, 14, 15, 44, 46) montés entre une linge commune de potentiel négatif (16) d'une source de tension continue ou tension redressée filtrée et stabilisée (18) et des extrémités libres des deux phases statoriques à structure bifilaire (7, 8) dont les points milieux (9, 10) sont reliés à une ligne commune de potentiel positif (17) de cette source (18), les gachettes des interrupteurs statiques (12, 13, 14, 15, 44, 46) étant commandées par un circuit de commande (20, 50) effectuant par une modulation de largeur d'impulsions une variation de vitesse de ce moteur asynchrone (2).

FIG_1

## SYSTEME A MOTEUR ELECTRIQUE D'ENTRAINEMENT EN ROTATION A VITESSE VARIABLE ET APPAREIL MUNI D'UN TEL SYSTEME

La présente invention concerne un système à moteur électrique d'entraînement en rotation à vitesse variable et un appareil tel qu'un lave-linge à tambour muni d'un tel système.

Dans des systèmes connus à moteur asynchrone d'entraînement en rotation à vitesse variable, le moteur est habituellement un moteur asynchrone triphasé et la variation de vitesse de ce moteur est fréquemment obtenue soit par une variation de sa fréquence statorique, soit par un contrôle de la puissance absorbée par son rotor bobiné.

Dans une variation de vitesse par une variation de la fréquence statorique d'un moteur asynchrone, le rotor de ce moteur est de préférence un rotor à cage qui est facile à réaliser et moins onéreux qu'un rotor bobiné équivalent. Les systèmes connus à moteur asynchrone d'entraînement en rotation à vitesse variable qui sont alimentés à partir d'une source de courant alternatif comprennent généralement, soit un circuit redresseur transformant cette source de courant alternatif en une source intermédiaire de courant continu, et un onduleur à modulation de largeur d'impulsion servant de commutateur alimentant leur moteur en courant à tension et à fréquence réglable à partir de cette source intermédiaire, soit un hacheur transformant une tension fixe de cette source intermédiaire en une tension de valeur réglable et un onduleur servant de commutateur alimentant leur moteur en courant à fréquence réglable..

Dans ces systèmes connus d'entraînement, leur onduleur servant de commutateur comprend pour chacune des phases statoriques de leur moteur asynchrone triphasé, un jeu distinct d'interrupteurs statiques. Il y a ainsi dans ces systèmes connus, au moins trois jeux distincts d'interrupteurs statiques pour les trois phases de leur moteur triphasé. Par ailleurs, plus le nombre d'interrupteurs statiques dans un système est grand, plus le prix de revient de ce système est élevé.

L'invention a pour objet un système économique et efficace à moteur électrique asynchrone d'entraînement en rotation à vitesse variable, qui permet d'éviter les inconvénients sus-mentionnés.

Selon l'invention, un système d'entraînement à moteur électrique asynchrone à stator à phases à structure bifilaire à point milieu et à vitesse rendue variable par variation de la fréquence statorique, est caractérisé en ce qu'il comprend une alimentation électrique des phases du stator à structure bifilaire du moteur asynchrone effectuée par un onduleur comportant des interrupteurs statiques montés entre une ligne commune de potentiel négatif d'une source de tension continue ou tension redressée filtrée et stabilisée et des extrémités libres des deux phases statoriques à structure bifilaire dont les points milieux sont reliés à une ligne commune de potentiel positif de cette source, les gachettes des interrupteurs statiques étant commandées par un circuit de commande effectuant par une modulation de largeur d'impulsions une variation de vitesse de ce moteur asynchrone.

Pour mieux faire comprendre l'invention, on décrit ci-après un certain nombre d'exemples de réalisation illustrés par des dessins ci-annexés dont :

- la figure 1 représente une vue schématique d'un système à moteur asynchrone à rotor cage et à stator diphasé à structure bifilaire d'entraînement en rotation à vitesse variable, réalisé selon l'invention,

- la figure 2 représente une courbe en fonction du temps d'un courant dans un interrupteur statique d'alimentation du moteur asynchrone diphasé du système de la figure 1,

- la figure 3 représente une vue schématique d'une variante de réalisation du système de la figure 1,

- la figure 4 représente une courbe en fonction du temps d'un courant dans une première demi-phase munie d'un interrupteur statique d'une phase du moteur asynchrone diphasé du système de la figure 3, et

- la figure 5 représente une courbe en fonction du temps d'un courant dans une deuxième demi-phase de cette même phase du moteur asynchrone diphasé du système de la figure 3.

La présente invention est applicable aux systèmes d'entraînement en rotation à vitesse variable des appareils ou dispositifs fonctionnant à des vitesses allant de quelques dizaines de tours par minute à plusieurs dizaines de milliers de tours par minute, par un moteur asynchrone à stator à phases à structure bifilaire à point milieu.

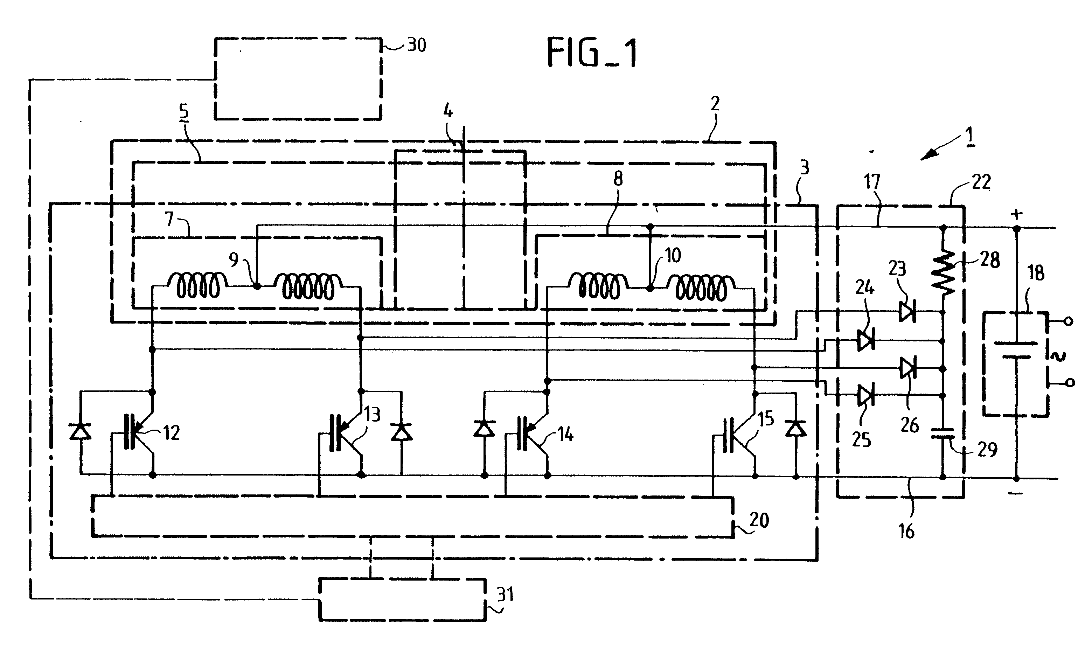

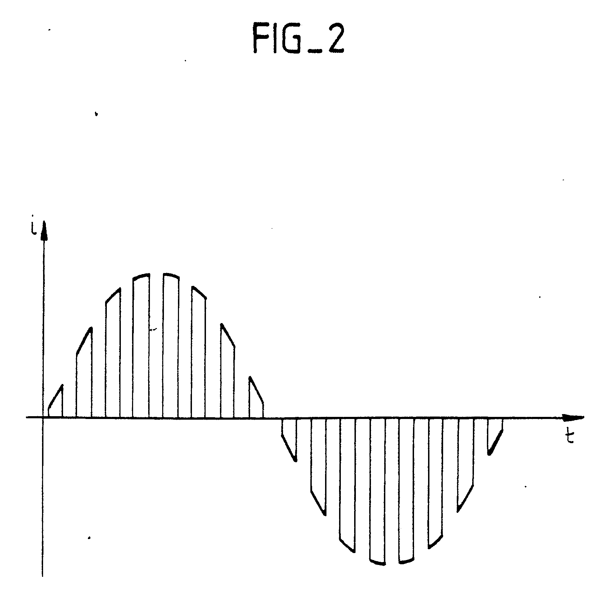

Un système à moteur électrique 1 d'entraînement en rotation à vitesse variable schématiquement et partiellement illustré dans les Figures 1 et 2 est un système d'entraînement ayant un moteur asynchrone 2 dont la variation de vitesse est obtenue par une variation de la fréquence statorique de ce moteur au moyen d'un onduleur 3 fonctionnant avec des interrupteurs statiques.

Ce système à moteur asynchrone d'entraînement à vitesse variable 1 comprend selon l'exemple illustré dans la figure 1 un moteur asynchrone 2 ayant un rotor à cage 4 et un stator diphasé à structure bifilaire 5.

Une structure statorique diphasé du moteur asynchrone 2 permet vis à vis de systèmes connus à moteur asynchrone triphasé d'entraînement en rotation à vitesse variable, de simplifier la commande de variation de vitesse par une variation de la fréquence statorique en agissant sur les deux phases de ce moteur au lieu d'exercer sur les trois phases d'un moteur triphasé, d'utiliser en conséquence un nombre moins grand d'interrupteurs statiques et d'obtenir ainsi une appréciable économie de composants coûteux.

Dans le moteur asynchrone diphasé du système d'entraînement en rotation à vitesse variable 1, chacune des phases statoriques 7, 8 est réalisée avec un conducteur électrique formé de deux fils électriques isolés bobinés ensemble et comporte un point milieux 9 ou 10.

Cette structure bifilaire de ce conducteur électrique contribue à faciliter un bon rangement de ce dernier dans des encoches des tôles du stator 5, et à obtenir grâce à un excellent tassement de ce conducteur non seulement des têtes des bobines statoriques relativement petites qui diminuent les inductances de fuite et augmentent par conséquent le rendement du moteur mais également une dimension plus faible du moteur vis à vis de celle d'un moteur équivalent dont les bobinages statoriques sont réalisées avec un conducteur monofilaire.

Dans le système d'entraînement en rotation à vitesse variable 1, l'alimentation électrique des deux phases 7 et 8 du stator diphasé 5 du moteur asynchrone 2 est effectuée par un onduleur 3 qui comprend quatre interrupteurs statiques 12, 13, 14, 15 montés entre une ligne commune de potentiel négatif 16 d'une source de tension continue ou tension redressée, filtrée et stabilisée 18, et les quatre extrémités libres des deux phases à structure bifilaire 7 et 8 du stator diphasé 5 du moteur asynchrone 2. Les points milieux 9 et 10 des deux phases à structure bifilaire 7, 8 sont reliés à une ligne commune de potentiel positif 17 de la source 18 . Les gâchettes des quatre interrupteurs statiques 12, 13, 14, 15 sont respectivement actionnées par un circuit de commande d'un type connu 20 qui effectue par une modulation connue de largeur d'impulsions, une variation de la fréquence statorique dans une variation de vitesse du moteur asynchrone 2. Les courants traversant les quatre interrupteurs statiques 12, 13, 14, 15 ont à un déphasage près, une forme générale périodique représentée dans la figure 2.

Dans l'alimentation électrique du moteur asynchrone 2, le système d'entraînement en rotation à vitesse variable 1 comprend un circuit écrêteur 22 (figure 1) associé à l'onduleur 3.

Lors d'une fermeture ou un blocage des Interrupteurs statiques 12, 13, 14, 15 des tensions dues à l'inductance propre statorique et à l'inductance de fuite statorique s'ajoutent à la tension redressée stabilisée d'alimentation 18 pour soumettre les bornes de ces interrupteurs statiques à une forte contrainte en tension. Pour soulager ces interrupteurs statiques, le circuit écrêteur 22 qui comprend d'une part une diode 23 ou 24 ou 25 ou 26, et un condensateur 29 en série, montées en parallèle respectivement aux bornes de ces interrupteurs statiques et d'autre part une résistance 28 reliant le point de jonction de ce condensateur 29 et cette diode 23 ou 24 ou 25 ou 26 aux points milieux 9 et 10 des phases statoriques 7 et 8 correspondantes à ces interrupteurs, permet à la puissance électrique qui s'y accumule, de s'évacuer à travers cette diode 23 ou 24 ou 25 ou 26 et de se dissiper dans cette résistance 28.

Dans le système à moteur asynchrone d'entraînement en rotation à vitesse variable 1, la résistance 28 du circuit écrêteur 22 est montée de préférence dans un endroit dégagé ou ventilé favorable à son refroidissement. En outre dans l'alimentation électrique par l'onduleur 3 des phases 7, 8 du moteur 2, la fréquence de découpage de modulation de largeur d'impulsions pour une variation de fréquence statorique dans une variation de vitesse de ce moteur 2 est de préférence choisie parmi les fréquences qui sont au-dessus des fréquences audibles.

Dans une application du système d'entraînement en rotation à vitesse variable 1 ci-dessus à un appareil tel qu'un lave-linge à tambour 30 (figure 1), l'onduleur 3 est commandé avec une modulation à largeur d'impulsions lors d'une variation de vitesse de rotation du tambour du lave-linge 30 par une variation de la fréquence statorique du moteur asynchrone d'entraînement de ce système 1, par un microprocesseur 31 en fonction des programmes de fonctionnement de ce lave-linge 30 préalablement enregistrés dans des mémoires de ce dernier.

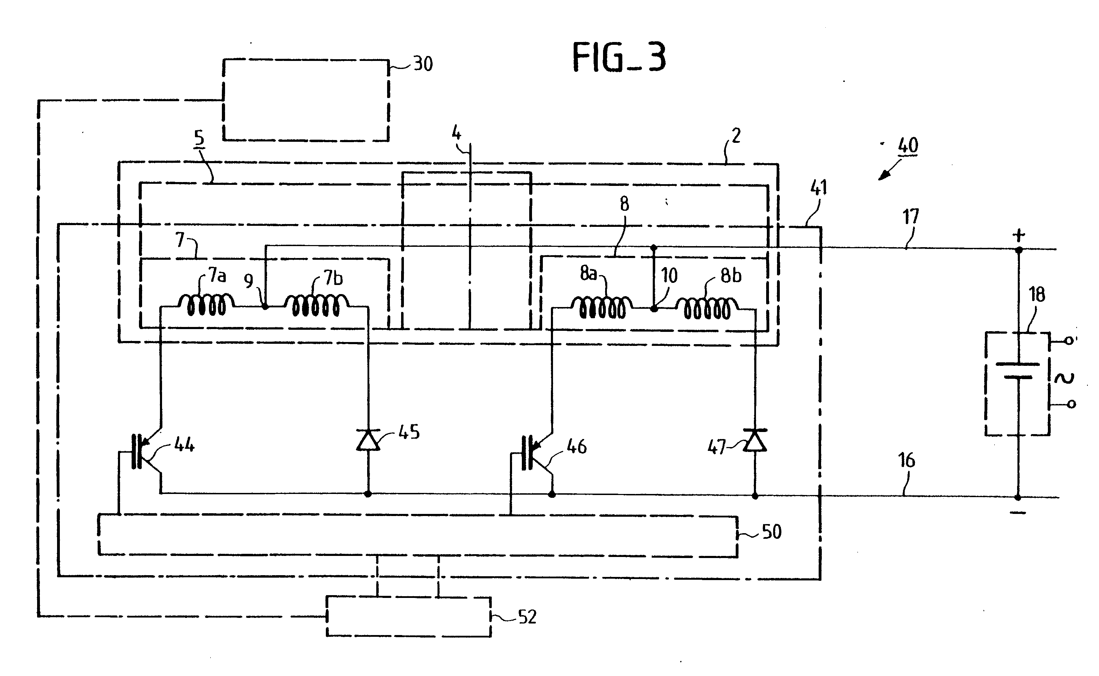

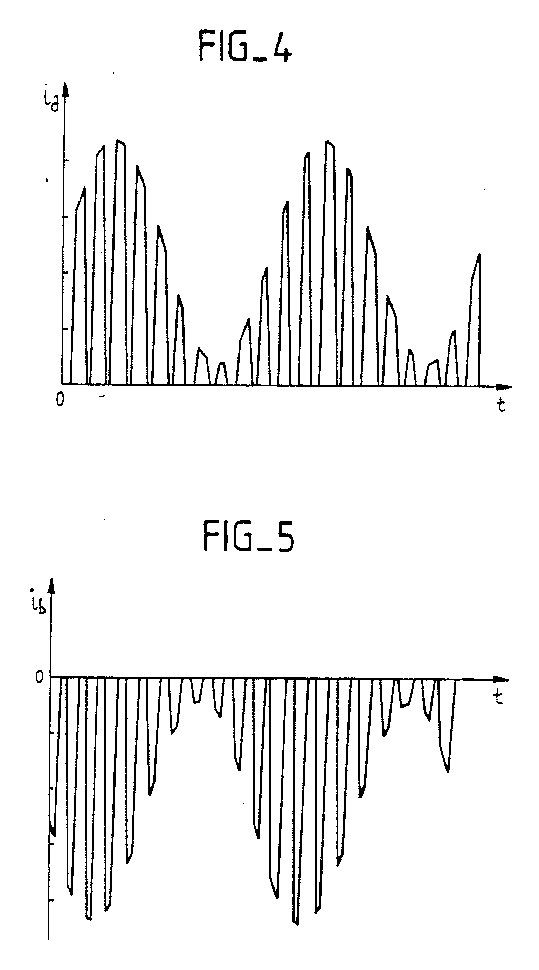

Selon une variante de réalisation illustrée schématiquement dans les figures 3 et 5, un système à moteur électrique d'entraînement en rotation à vitesse variable 40 comprend un moteur asynchrone 2 dont la variation de vitesse est obtenue par une variation de la fréquence statorique de ce moteur au moyen d'un onduleur 41 fonctionnant avec des interrupteurs statiques. Le moteur asynchrone 2 dans cette variante de réalisation comprend, comme celui du premier exemple de réalisation (figure 1), un rotor à cage 4 et un stator diphasé à structure bifilaire 5.

Dans le moteur asynchrone diphasé 2, les deux phases statoriques 7 et 8 sont réalisées chacune avec un conducteur électrique formé de deux fils électriques isolés bobinés ensemble et comportant ainsi chacune deux demi-phases 7a, 7b et 8a, 8b et des points milieux 9 et 10 de ces demi-phases.

L'alimentation électrique des phases 7 et 8 du stator du moteur asynchrone 2 est effectuée par un onduleur 41 qui comprend d'une part pour chacune de ces phases statoriques 7 et 8 un interrupteur statique 44 ou 46 et un composant de puissance à passage unidirectionnel de courant 45 ou 47 respectivement montés entre une ligne commune de potentiel négatif 16 d'une source de tension continue ou tension redressée filtrée et stabilisée 18, et les deux extrémités libres des demi-phases 7a, 7b ou 8a, 8b de chacune des phases 7 et 8 du stator 5 du moteur asynchrone 2, les points milieux 9, 10 de ces phases statoriques 7, 8 étant reliés à une ligne commune de potentiel positif 17 de la source 18 et d'autre part un circuit de commande d'un type connu 50 des gâchettes des interrupteurs statiques 44 et 46, qui effectue, par une modulation de largeur d'impulsions avec une addition au signal modulant une composante continue prédéterminée, une variation de la fréquence statorique réalisant une variation de vitesse du moteur asynchrone 2.

La composante continue ajoutée au signal modulant est prédéterminée de manière que le courant instantané Ia en fonction des temps t (ia(t)) dans une demie-phase 7a ou 8a munie d'interrupteur statique 44 ou 46 d'une phase 7 ou 8, soit toujours positif (figure 4), et le courant instantané ib en fonction du temps t (ib(t)) dans une autre demie-phase 7b ou 8b munie de composant de puissance 45 ou 47 de cette même phase 7 ou 8, soit toujours négatif (figure 5). Il en résulte que les interrupteurs statiques 44 et 46 peuvent être des composants commandables unidirectionnels en courant et que les composants de puissance 45 et 47 peuvent être des composants de puissance à passage unidirectionnel de courant et de préférence des diodes.

Dans cette variante de réalisation, le nombre des interrupteurs statiques utilisés est avantageusement plus faible que celui dans le système réalisé selon le premier exemple ci-dessus.

Dans une application du système d'entraînement en rotation à vitesse variable 40 à un appareil tel qu'un lave-linge à tambour 30 (figure 3), l'onduleur 41 réalisant une modulation à largeur d'impulsions lors d'une variation de vitesse de rotation du tambour du lave-linge 30 par une variation de la fréquence statorique du moteur asynchrone diphasé d'entraînement de ce système 40, est commandé par un microprocesseur 52 en fonction des programmes de fonctionnement de ce lave-linge 30 préalablement enregistrés dans des mémoires de ce dernier.

## Revendications

1. Système d'entraînement à moteur électrique asynchrone à stator à phases à structure bifilaire à point milieu et à vitesse rendue variable par variation de la fréquence statorique, caractérisé en ce qu'il comprend une alimentation électrique des phases (7, 8) du stator à structure bifilaire (5) du moteur asynchrone (2) effectuée par un onduleur (3,41) comportant des interrupteurs statiques (12, 13, 14, 15, 44, 46) montés entre une linge commune de potentiel négatif (16) d'une source de tension continue ou tension redressée filtrée et stabilisée (18) et des extrémités libres des deux phases statoriques à structure bifilaire (7. 8) dont les points milieux (9, 10) sont reliés à une ligne commune de potentiel positif (17) de cette source (18), les gâchettes des interrupteurs statiques (12, 13, 14, 15, 44, 46) étant commandées par un circuit de commande (20, 50) effectuant par une modulation de largeur d'impulsions une variation de vitesse de ce moteur asynchrone (2).

2. Système selon la revendication 1. caractérisé en ce qu'il comprend dans l'alimentation électrique du moteur asynchrone (2) un circuit écrêteur (22) associé à l'onduleur (3).

3. Système selon la revendication 2. caractérisé en ce que le circuit écrêteur (22) comprend d'une part une diode (23, 24, 25, 26) et un condensateur (29) en série, montées en parallèles respectivement aux bornes des Interrupteurs statiques (12, 13, 14, 15) et d'autre part une résistance (28)-reliant le point de jonction de ce condensateur (29) et cette diode (23, 24, 25, 26) respectivement aux points milieux (9, 10) des phases statoriques (7, 8) du moteur asynchrone (2).

4. Système selon la revendication 3. caractérisé en ce que dans le circuit écrêteur (22), la résistance (28) est montée dans un endroit dégagé ou ventilé de ce système (1).

5. Système selon la revendication 1. caractérisé en ce que dans l'alimentation électrique du moteur asynchrone (2) par l'onduleur (3) des phases (7, 8), la fréquence de découpage de modulation de largeur d'impulsions pour une variation de fréquence statorique dans une variation de vitesse de ce moteur asynchrone (2) est choisie parmi les fréquences qui sont au-dessus des fréquences audibles.

6. Système selon la revendication 1. caractérisé en ce qu'il comprend une alimentation électrique des phases (7, 8) du stator de ce moteur (2), effectuée par un onduleur (41) qui comporte d'une part pour chacune de ces phases statoriques (7,8) un interrupteur statique (44 ou 46) et un composant de puissance à passage unidirectionnel de courant (45 ou 47), respectivement montés entre une ligne commune de potentiel négatif (16) d'une source de tension continue ou tension redressée filtrée et stabilisée (18) et les deux extrémités libres des demi-phases (7a, 7b ou 8a, 8b) de chacune des phases (7, 8) du stator (5) du moteur asynchrone (2), les points milieux (9, 10) de ces phases statoriques (7, 8) étant reliés à une ligne commune de potentiel positif (17) de la source (18), et d'autre part un circuit de commande (50) des gâchettes des interrupteurs statiques (44, 46) qui effectue par une modulation de largeur d'impulsions avec une addition au signal modulant une composante continue prédéterminée une variation de la fréquence statorique réalisant une variation de vitesse du moteur asynchrone (2).

7. Système selon la revendication 6, caractérisé en ce que dans une variation de la fréquence statorique du moteur asynchrone (2) réalisant une variation de vitesse de ce moteur, le circuit de commande (50) des gâchettes des interrupteurs statiques (44, 46) effectue une modulation de largeur d'impulsions avec une addition au signal modulant une composante continue prédéterminée de manière que le courant instantané la en fonction du temps t (ia(t)) dans une demi-phase (7a ou 8a) munie d'interrupteur statique (44 ou 46) d'une phase (7 ou 8), soit toujours positif, et le courant instantané ib en fonction du temps t (ib(t)) dans une autre demi-phase (7b ou 8b) munie de composant de puissance à passage unidirectionnel de courant (45 ou 47) de cette même phase (7 ou 8) soit toujours négatif.

8. Système selon l'une des revendications 6 et 7, caractérisé en ce que dans l'onduleur (41) qui assure l'alimentation électrique des phases statoriques (7, 8) du moteur asynchrone (2), les composants de puissance à passage unidirectionnel de courant (45, 47) sont constituées par des diodes.

9. Système selon l'une des revendications 6 à 8, caractérisé en ce que dans l'onduleur (41) qui assure l'alimentation électrique des phases statoriques (7, 8) du moteur asynchrone (2), les interrupteurs statiques (44, 46) sont constitués par des interrupteurs statiques commandables unidirectionnels en courant.

10. Appareil tel qu'un lave-linge à tambour muni d'un système à moteur électrique d'entraînement en rotation à vitesse variable selon l'une des revendications 1 à 9, caractérisé en ce que dans ce système, l'onduleur (3,41) réalisant une modulation à largeur d'impulsions lors d'une variation de vitesse de rotation du tambour du lave-linge (30) par une variation de fréquence statorique de ce moteur, est commandé par un microprocesseur (31,52) en fonction des programmes de fonctionnement de ce lave-linge (30) préalablement enregistrés dans des mémoires de ce dernier.

FIG_1

EP 0 402 267 A1

EP 0 402 267 A1

FIG_2

# FIG_3

EP 0 402 267 A1

# FIG_4

# FIG_5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 418 309 (P.G. BARTLETT) <br> * colonne 1, lignes 27-42; colonne 1, lignes 65 - colonne 4, ligne 12; figure unique * <br> --- | 1-3,5-8 | H 02 P 7/628 <br> H 02 P 7/62 <br> D 06 F 37/30 |
| A | US-A-4 404 512 (J. GREENWELL) <br> * colonne 6, ligne 59 - colonne 7, ligne 14; colonne 6, lignes 18-55; figure 5 * <br> --- | 2-4 | |
| A | GB-A-2 175 157 (B.W. WILLIAMS) <br> * résumé; page 2, lignes 2-35; figure 3a * <br> --- | 6-9 | |
| A | US-A-4 575 668 (R.W. BAKER) <br> * colonne 2, lignes 11-59; figure 1 * <br> ----- | 10 | |

DOMAINES TECHNIQUES RECHERCHES (Int. Cl.5)

H 02 P 7/00
H 02 P 5/00
D 06 F 37/00
H 02 P 8/00
H 02 M 7/00

Le présent rapport a été établi pour toutes les revendications

| Lieu de la recherche | Date d'achèvement de la recherche | Examinateur |
|---|---|---|
| BERLIN | 27-08-1990 | WEIHS J.A. |